# EUROPEAN PATENT SPECIFICATION

(11) **EP 2 901 083 B1**
(45) Date of publication and mention of the grant of the patent: **19.02.2020**
(21) Application number: 13843014.5
(22) Date of filing: 15.03.2013
(51) Int. Cl.: F01D 25/24, F01D 5/08, F23R 3/50, F23R 3/60, F02C 3/04, F02C 7/12, F02C 7/20

(54) **GAS TURBINE COMBUSTOR ASSEMBLY AND METHOD OF ASSEMBLING THE SAME**
GASTURBINENBRENNKAMMERANORDNUNG UND VERFAHREN ZUR MONTAGE DERSELBEN
ENSEMBLE COMBUSTEUR DE TURBINE À GAZ ET PROCÉDÉ D'ASSEMBLAGE D'UN TEL ENSEMBLE

(30) Priority: 26.09.2012 US 201261705654 P
(43) Date of publication of application: 05.08.2015
(73) Proprietor: United Technologies Corporation, Farmington, CT 06032 (US)
(72) Inventor: JAUSE, Jonathan M., Vernon, Connecticut 06066 (US); LOW, Kevin Joseph, Portland, Connecticut 06480 (US); DUHAMEL, Dennis John, Oakdale, Connecticut 06370 (US)
(74) Representative: Dehns
(86) International application number: PCT/US2013/031856
(87) International publication number: WO 2014/051690

(56) References cited:
- EP-A2- 1 764 484
- EP-A2- 2 078 826
- WO-A1-00/71854
- WO-A1-2014/120124
- US-A- 4 526 511
- US-A1- 2004 247 429
- US-A1- 2006 127 215
- US-A1- 2008 041 064
- US-A1- 2009 097 971

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section.

Assembly techniques are constantly being updated to increase efficiencies, simplify maintenance, and accommodate changing part configurations. Moreover, it is desirable to limit the number of fasteners required to secure and attached specific components. Combustor modules can include multiple components that are stacked and assembled onto one another and utilize fasteners to secure each of the multiple components. However, maintaining a desired alignment without fasteners until assembly is complete presents a challenge.

Turbine engine manufacturers continue to seek improvements in manufacture, engine assembly, and performance including improvements to thermal, transfer and propulsive efficiencies.

A known combustor assembly is disclosed in US 2006/127215.

### SUMMARY

In accordance with the invention, there is provided a combustor assembly for a gas turbine engine as set forth in claim 1, namely a combustor assembly for a gas turbine engine comprising a combustor shell; a turbine rotor; a vane pack downstream from the combustor shell and upstream from the turbine rotor; a tangential on board injector (TOBI); a case; and a joint for securing the combustor shell, tangential on board injector and case together. The joint has a combustor flange integral to the combustor shell, a tangential on board injector flange integral to the tangential on board injector and a case flange integral to the case, wherein the combustor flange, the tangential on board injector flange and the case flange are secured together, the combustor flange includes first and second sets of holes respectively receiving first and second fasteners that are different than one another, the first and second fasteners securing the combustor flange, the tangential on board injector flange and the case flange together, and the second fastener is a nut and a bolt that extends through the combustor flange, the tangential on board injector flange and the case flange.

In a further embodiment of the above, the combustor flange, the TOBI flange and the case flange are annular flanges extending generally in a radial direction with respect to an engine axis.

In a further embodiment of any of the above, the TOBI flange includes an axially extending portion. The combustor flange and the case flange are received radially inboard of the axially extending portion.

In a further embodiment of any of the above, the combustor flange is arranged axially between the case flange and the TOBI flange.

In a further embodiment of any of the above, the combustor flange and axially extending portion are provided in an interference fit relationship with one another.

In a further embodiment of any of the above, the case flange and axially extending portion are provided in an interference fit relationship with one another.

In a further embodiment of any of the above, the first fastener is flush with the combustor flange and arranged beneath an adjacent flange surface.

In a further embodiment of any of the above, the first fastener is a flat head screw.

In a further embodiment of any of the above, the first fastener is a rivet.

In a further embodiment of any of the above, the combustor assembly includes a vane pack that is secured to the TOBI and the combustor.

In a further embodiment of any of the above, a turbine section includes a turbine rotor. A core engine includes a compressor section. The combustor is arranged fluidly in communication with and between the compressor section and the turbine section. The TOBI includes an injector that provides cooling fluid guided by the case structure to the turbine rotor.

In accordance with the invention there is provided, as set forth in claim 11, a method of assembling a combustor section according to claim 1, comprising attaching the tangential on board injector flange to the combustor flange using the first fasteners to form a subassembly; and securing the case flange to the tangential on board injector flange and the combustor flange using the second fasteners.

In a further embodiment of any of the above, a TOBI that includes the TOBI flange, and comprising the step of securing the TOBI to a vane pack prior to the attaching step.

In a further embodiment of any of the above, the attaching step includes drawing the combustor flange and TOBI flange toward one another in an interference fit relationship.

In a further embodiment of any of the above, the drawing step includes tightening assembly fasteners and then removing the assembly fasteners before the securing step.

In a further embodiment of any of the above, the drawing step is performed before the attaching step. The attaching step includes threading the first fasteners into one of the TOBI flange and the combustor flange.

In a further embodiment of any of the above, a combustor shell includes the combustor flange. A diffuser case includes the case flange.

In a further embodiment of any of the above, the first fasteners are arranged beneath a surface of the case flange.

### BRIEF DESCRIPTION OF THE DRAWINGS

The invention can be further understood by reference to the following detailed description when considered in connection with the accompanying drawings wherein:
Figure 1 is a schematic view of an example gas turbine engine including a combustor.
Figure 2 is an enlarged schematic view of a gas turbine engine in the area of the combustor.
Figure 3A is an enlarged cross-sectional view of a combustor joint taken along line 3A-3A in Figure 4.
Figure 3B is an enlarged cross-sectional view of a combustor joint taken along line 3B-3B in Figure 4.
Figure 4 is an elevational view of a combustor flange of the combustor.
Figures 5A-5E schematically illustrates an assembly procedure of the combustor joint.

### DETAILED DESCRIPTION

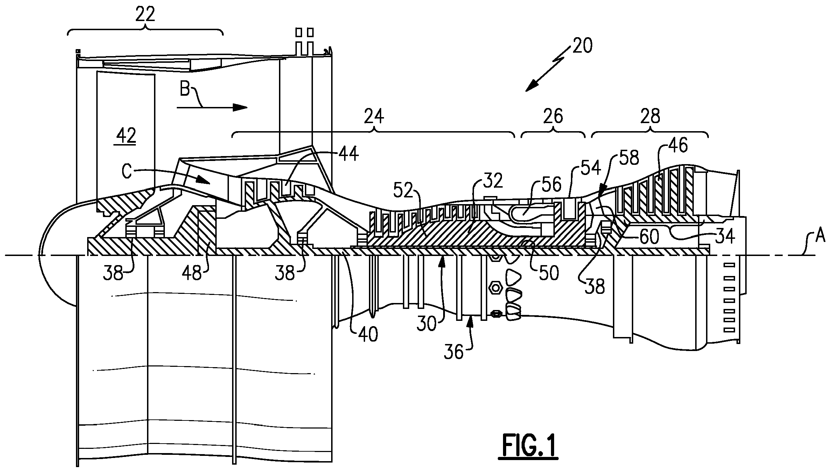

Figure 1 schematically illustrates an example gas turbine engine 20 that includes a fan section 22, a compressor section 24, a combustor section 26 and a turbine section 28. Alternative engines might include an augmenter section (not shown) among other systems or features. The fan section 22 drives air along a bypass flow path B while the compressor section 24 draws air in along a core flow path C where air is compressed and communicated to a combustor section 26. In the combustor section 26, air is mixed with fuel and ignited to generate a high-pressure exhaust gas stream that expands through the turbine section 28 where energy is extracted and utilized to drive the fan section 22 and the compressor section 24.

Although the disclosed non-limiting embodiment depicts a turbofan gas turbine engine, it should be understood that the concepts described herein are not limited to use with turbofans as the teachings may be applied to other types of turbine engines; for example a turbine engine including a three-spool architecture in which three spools concentrically rotate about a common axis and where a low spool enables a low pressure turbine to drive a fan via a gearbox, an intermediate spool that enables an intermediate pressure turbine to drive a first compressor of the compressor section, and a high spool that enables a high pressure turbine to drive a high pressure compressor of the compressor section.

The example engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that connects a fan 42 and a low pressure (or first) compressor section 44 to a low pressure (or first) turbine section 46. The inner shaft 40 drives the fan 42 through a speed change device, such as a geared architecture 48, to drive the fan 42 at a lower speed than the low speed spool 30. The high-speed spool 32 includes an outer shaft 50 that interconnects a high pressure (or second) compressor section 52 and a high pressure (or second) turbine section 54. The inner shaft 40 and the outer shaft 50 are concentric and rotate via the bearing systems 38 about the engine central longitudinal axis A.

A combustor 56 is arranged between the high-pressure compressor 52 and the high-pressure turbine 54. In one example, the high-pressure turbine 54 includes at least two stages to provide a double stage high-pressure turbine 54. In another example, the high-pressure turbine 54 includes only a single stage. As used herein, a "high pressure" compressor or turbine experiences a higher pressure than a corresponding "low pressure" compressor or turbine.

The example low-pressure turbine 46 has a pressure ratio that is greater than about 5. The pressure ratio of the example low-pressure turbine 46 is measured prior to an inlet of the low-pressure turbine 46 as related to the pressure measured at the outlet of the low-pressure turbine 46 prior to an exhaust nozzle.

A mid-turbine frame 58 of the engine static structure 36 is arranged generally between the high-pressure turbine 54 and the low-pressure turbine 46. The mid-turbine frame 58 further supports bearing systems 38 in the turbine section 28 as well as setting airflow entering the low pressure turbine 46.

The core airflow C is compressed by the low pressure compressor 44 then by the high pressure compressor 52 mixed with fuel and ignited in the combustor 56 to produce high speed exhaust gases that are then expanded through the high pressure turbine 54 and low pressure turbine 46. The mid-turbine frame 58 includes vanes 60, which are in the core airflow path and function as an inlet guide vane for the low-pressure turbine 46. Utilizing the vane 60 of the mid-turbine frame 58 as the inlet guide vane for low-pressure turbine 46 decreases the length of the low-pressure turbine 46 without increasing the axial length of the mid-turbine frame 58. Reducing or eliminating the number of vanes in the low-pressure turbine 46 shortens the axial length of the turbine section 28. Thus, the compactness of the gas turbine engine 20 is increased and a higher power density may be achieved.

The disclosed gas turbine engine 20 in one example is a high-bypass geared aircraft engine. In a further example, the gas turbine engine 20 includes a bypass ratio greater than about six (6), with an example embodiment being greater than about ten (10). The example-geared architecture 48 is an epicyclical gear train, such as a planetary gear system, star gear system or other known gear system, with a gear reduction ratio of greater than about 2.3.

In one disclosed embodiment, the gas turbine engine 20 includes a bypass ratio greater than about ten (10:1) and the fan diameter is significantly larger than an outer diameter of the low-pressure compressor 44. It should be understood, however, that the above parameters are only exemplary of one embodiment of a gas turbine engine including a geared architecture and that the present disclosure is applicable to other gas turbine engines.

A significant amount of thrust is provided by the bypass flow B due to the high bypass ratio. The fan section 22 of the engine 20 is designed for a particular flight condition -- typically cruise at about 0.8 Mach and about 10,668 m (35,000 feet). The flight condition of 0.8 Mach and 10,668 m (35,000 feet), with the engine at its best fuel consumption - also known as "bucket cruise Thrust Specific Fuel Consumption ('TSFC')" - is the industry standard parameter of pound-mass (lbm) of fuel per hour being burned divided by pound-force (lbf) of thrust the engine produces at that minimum point.

"Low fan pressure ratio" is the pressure ratio across the fan blade alone, without a Fan Exit Guide Vane ("FEGV") system. The low fan pressure ratio as disclosed herein according to one non-limiting embodiment is less than about 1.50. In another non-limiting embodiment the low fan pressure ratio is less than about 1.45.

"Low corrected fan tip speed" is the actual fan tip speed in ft/sec divided by an industry standard temperature correction of [(Tram °R) / 518.7) ^{0.5}]. The "Low corrected fan tip speed", as disclosed herein is less than about 350.5 m/s (1150 ft/second).

The example gas turbine engine includes the fan 42 that comprises in one non-limiting embodiment less than about 26 fan blades. In another non-limiting embodiment, the fan section 22 includes less than about 20 fan blades. Moreover, in one disclosed embodiment the low-pressure turbine 46 includes no more than about 6 turbine rotors schematically indicated at 34. In another non-limiting example embodiment the low-pressure turbine 46 includes about 3 turbine rotors. A ratio between the number of fan blades 42 and the number of low-pressure turbine rotors is between about 3.3 and about 8.6. The example low-pressure turbine 46 provides the driving power to rotate the fan section 22 and therefore the relationship between the number of turbine rotors 34 in the low-pressure turbine 46 and the number of blades 42 in the fan section 22 disclose an example gas turbine engine 20 with increased power transfer efficiency.

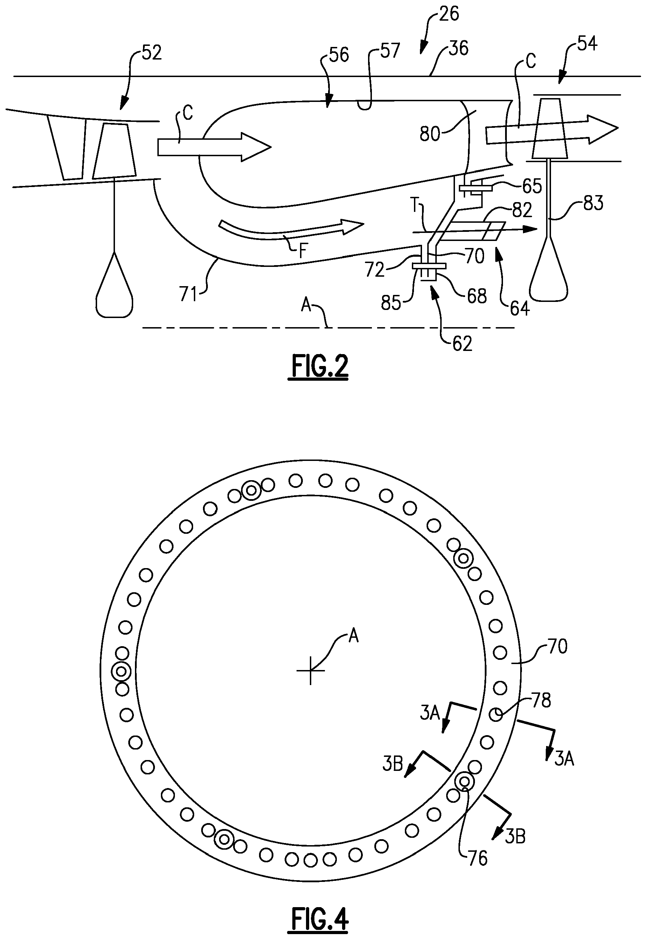

Referring to Figure 2, core flow C passes from the compressor section 52 through the combustor section 56 to the turbine section 54. A vane pack 80 is arranged downstream from a combustor shell 57 of the combustor section 56 and upstream from the turbine section 54 to direct the core flow C into the turbine section 54. A diffuser case 71, directs a portion of flow F of the core flow C through an injector 82 of a tangential on board injector (TOBI) 64. The injector 82 supplies cooling fluid T to a turbine rotor 83 in the turbine section 54.

A joint or fastened connection 62 has a tangential on board injector (TOBI) flange 68, a combustor flange 70 and a diffuser case flange 72. Each flange 68, 70, 72 is rigidly attached, for example, integrally, to a respective TOBI 64, combustor shell 57 and diffuser case 71, or case structure. The flanges 68, 70, 72 are held together in a sandwiched fashion via a plurality of fasteners 85. In addition, the TOBI 64 is secured to the vane pack 80 by fasteners 65.

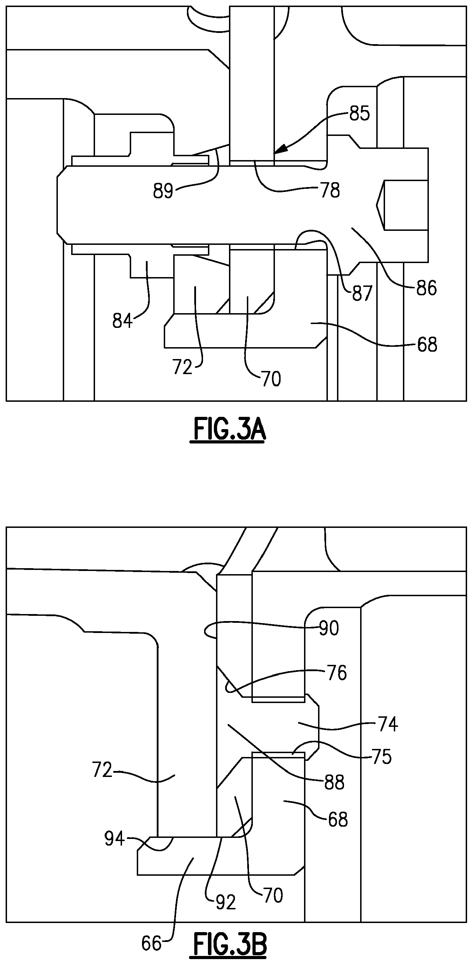

Referring to Figures 3A, 3B and 4, the combustor flange 70 includes a plurality of straight-bored holes 78 and a plurality of countersunk or beveled holes 76. Holes 78 are spaced circumferentially about the flange 70 with the holes 76 located intermittently therebetween. Similarly, the TOBI flange 68 has a plurality of holes 75 that may be threaded and align with the holes 76 of the combustor flange 70 for receipt of fastener 74; and, a plurality of holes 87 that align with the holes 78. Moreover, the diffuser case flange 72 has a plurality of apertures 89 that align with the holes 78, 87 of the respective flanges 70, 68 for receipt of fasteners 86. According to the invention, the fasteners 85 include nuts 84, affixed to apertures 89 in the diffuser case flange 72 and bolts 86 that extend through holes 87 in the TOBI flange 68 and the holes 78. The fasteners 65, may be threaded fasteners; however, it should be understood that other fasteners, such as rivets or clamping devices may also be used.

As best shown in Figure 3B, fastener 74 rigidly secures the combustor flange 70 to the TOBI flange 68. The fastener 74 may generally be a machine screw with a tapered head that conforms to the bevel of hole 76 so that the fastener 74 when installed is flush or completely sunk into the combustor flange 70. As best shown in Figure 3A, the fasteners 86 are through bolts having an enlarged head and threaded nut for securing all three flanges 68, 70, 72 together via respective holes 75, 76 and aperture 89. In the final configuration, the combustor flange 70 may be located axially between the flanges 68, 72 and with respect to the engine axis.

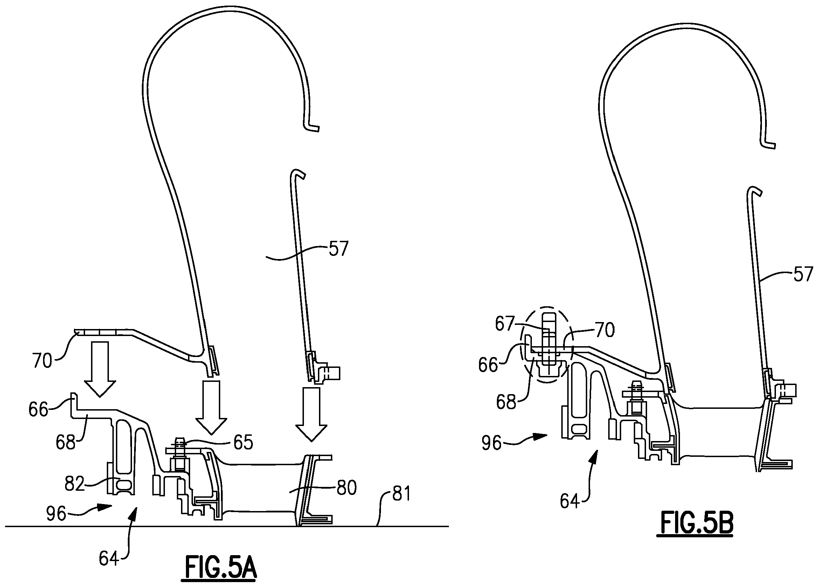

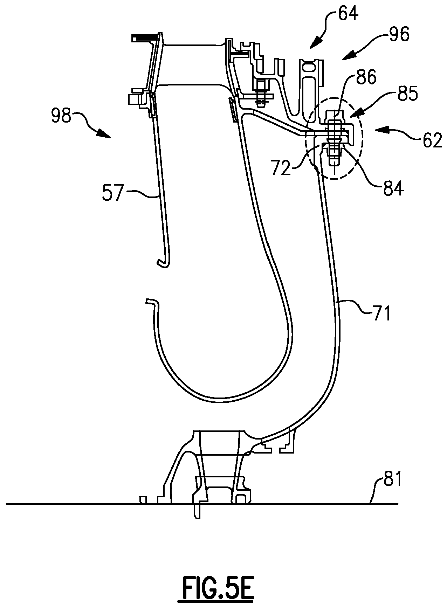

During assembly, the combustor shell 57 and a TOBI module 96 (Figures 5A - 5E), which includes the TOBI 64 and vane pack 80, are assembled to one another, and then together assembled to the diffuser case flange 72 using the fasteners 85 (shown in Figure 3A), and positioned within the combustor section 56 of the engine. Because the fasteners 74 are countersunk as previously described, the diffuser case flange 72 may lay flat against the combustor flange 70 when fully assembled. In particular, the head 88 of each fastener 74, which are flat head screws in the example, is flush with the combustor flange 70 and arranged beneath a surface 90 of the diffuser case flange 72. Moreover, as the final connection includes a plurality of fasteners 85 it is not necessary to provide many first fasteners 74. All that is required is a sufficient number of first fasteners 74 to maintain the desired fit between the combustor flange 70 and TOBI flange 68 during the assembly process.

Referring to Figures 5A-E, a disclosed example assembly sequence includes the initial step of aligning the combustor assembly 56 with the TOBI module, which includes the vane pack 80 and the TOBI 64 secured to one another by the fasteners 65. The TOBI module 96 may be supported by a work surface 81. However, the disclosed assembly process could be utilized for other structural configurations.

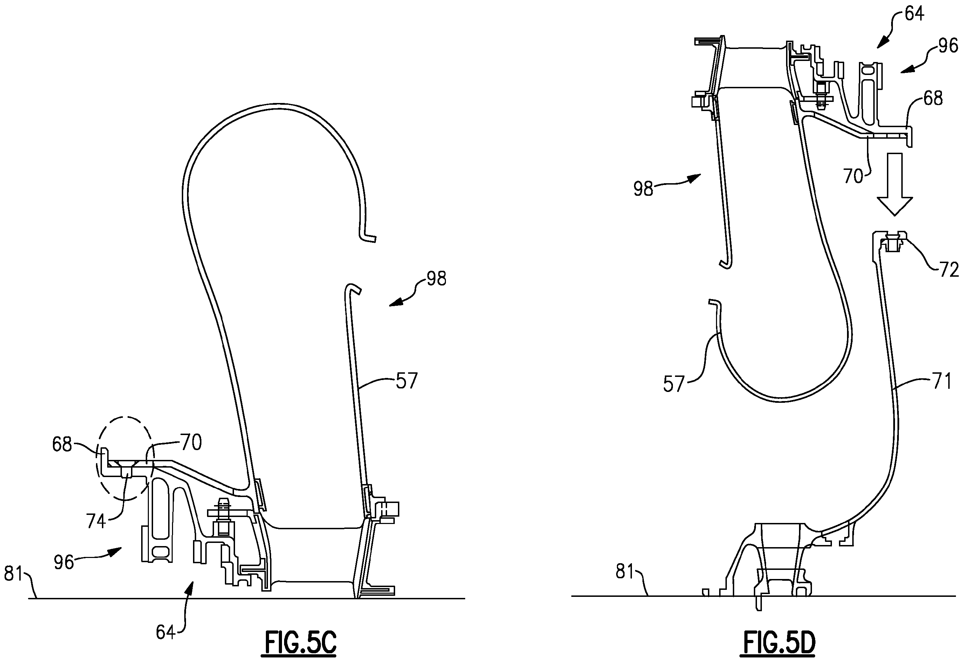

TOBI flange 68 includes an axially projecting rim or portion 66 that generally receives and radially centers the combustor flange 70 (Figures 5A and 5B) with respect to the engine axis. The combustor flange 70 includes an outer diameter 92, best shown in Figure 3B, that is an interference fit to the axially extending portion 66. A plurality of assembly fasteners 67, in the example bolts, are utilized to draw the combustor flange 70 into the desired fit at the interface with the combustor shell 57 and the TOBI 64 (Figure 5B). Once the desired fit is obtained, the temporary assembly fasteners 67 are removed and the fasteners 74 are passed through the first set of holes 76 and threaded into the holes 75 in the combustor flange 70 and threaded into threads provided in the TOBI flange 68 (Figure 5C).

The TOBI flange 68 and the combustor flange 70 maintain the desired connection and fit due to the fasteners 74. The fasteners 74 are provided at substantially even intervals about a circumference of the combustor flange 70 as is shown in Figure 4.

Because the fasteners 74 maintain the fit between the combustor shell 57 and the TOBI 64, the entire sub-assembly can be moved and manipulated without concern of the parts separating. The diffuser case flange 72 is then placed against the TOBI flange 68 such that the combustor flange 70, injection TOBI flange 68 and the diffuser case flange 72 all align (Figure 5D) via the rim 66 apertures 89 and holes 78. In one example, an outer diameter 94 of the diffuser case flange 72 is in an interference fit with the axially extending portion 66, as shown in Figure 3B. The first fasteners 74 becomes trapped between the combustor flange 70 and the diffuser case flange 72 and therefore will not come loose during operation, as best shown in Figure 3B.

Once the combustor-TOBI module subassembly 98 is mounted with respect to the diffuser case flange 72, the fasteners 85 are inserted into the respective holes 78 to secure the TOBI flange 68, combustor flange 70 and diffuser case flange 72 together and thus forming the assembled joint 62. The fasteners 74 may no longer serve a connection purpose but are simply left trapped within the assembly.

Accordingly, the example combustor assembly provides an improved and simplified configuration that utilizes a bolted connection to secure three components and a few assembly screws to maintain a relative orientation of the combustor-injection module subassembly during assembly.

Although an example embodiment has been disclosed, a worker of ordinary skill in this art would recognize that certain modifications would come within the scope of invention as defined in the appended claims. For that reason, the following claims should be studied to determine the scope. The use of "first", "second", and the like in the following claims is for differentiation within the claim only and does not necessarily indicate relative or absolute importance or temporal order.

## Claims

1. A combustor assembly (56) for a gas turbine engine (20) comprising:
a combustor shell (57);
a turbine rotor (83);
a vane pack (80) downstream from the combustor shell (57) and upstream from the turbine rotor (83);
a tangential on board injector (64);
a case (71); and
a joint (62) for securing the combustor shell (57), tangential on board injector (64) and case (71) together, the joint (61) having a combustor flange (70) integral to the combustor shell (57), a tangential on board injector flange (68) integral to the tangential on board injector (64) and a case flange (72) integral to the case (71), wherein the combustor flange (70), the tangential on board injector flange (68) and the case flange (72) are secured together, the combustor flange (70) includes first and second sets of holes (75, 78) respectively receiving first and second fasteners (74, 85) that are different than one another, the first and second fasteners (74, 85) securing the combustor flange (70), the tangential on board injector flange (68) and the case flange (72) together, and the second fastener (85) is a nut and a bolt that extends through the combustor flange (70), the tangential on board injector flange (68) and the case flange (72).

2. The combustor assembly according to claim 1, wherein the combustor flange (70), the tangential on board injector flange (68) and the case flange (72) are annular flanges extending generally in a radial direction with respect to an engine axis (A).

3. The combustor assembly according to claim 2, wherein the tangential on board injector flange (68) includes an axially extending portion (66), the combustor flange (70) and the case flange (72) received radially inboard of the axially extending portion (66).

4. The combustor assembly according to claim 3, wherein the combustor flange (70) is arranged axially between the case flange (72) and the tangential on board injector flange (68).

5. The combustor assembly according to claim 3 or 4, wherein:
the combustor flange (70) and axially extending portion (66) are provided in interference fit relationship with one another; and/or
the case flange (72) and axially extending portion (66) are provided in interference fit relationship with one another.

6. The combustor assembly according to any preceding claim, wherein the first fastener (74) is flush with the combustor flange (70) and arranged beneath an adjacent flange surface (90).

7. The combustor assembly according to claim 6, wherein the first fastener (74) is a flat head screw.

8. The combustor assembly according to any of claims 1 to 6, wherein the first fastener (74) is a rivet.

9. The combustor assembly according to any preceding claim, wherein the vane pack (80) is secured to the tangential on board injector (64) and the combustor (57).

10. A gas turbine engine comprising the combustor assembly (56) according to claim 9, a turbine section (54) including the turbine rotor (83), and a core engine including a compressor section (52), the combustor (56) arranged fluidly in communication with and between the compressor section (52) and the turbine section (54), the tangential on board injector including an injector (82) providing cooling fluid guided by the case structure (71) to the turbine rotor (83).

11. A method of assembling a combustor assembly (56) according to claim 1 comprising:
attaching the tangential on board injector flange (68) to the combustor flange (70) using the first fasteners (74) to form a subassembly; and
securing the case flange (72) to the tangential on board injector flange (68) and the combustor flange (70) using the second fasteners (85).

12. The method according to claim 11, comprising the step of securing the tangential on board injector (64) to a vane pack (80) prior to the attaching step.

13. The method according to claim 11 or 12, wherein the attaching step includes drawing the combustor flange (70) and the tangential on board injector flange (68) toward one another in an interference fit relationship.

14. The method according to claim 13, wherein the drawing step:
includes tightening assembly fasteners and then removing the assembly fasteners before the securing step; and/or
is performed before the attaching step, the attaching step includes threading the first fasteners (74) into one of the tangential on board injector flange (68) and the combustor flange (70).

15. The method according to any of claims 11 to 14, wherein the first fasteners (74) are arranged beneath a surface of the case flange (72).

## Patentansprüche

1. Brennkammeranordnung (56) für einen Gasturbinenmotor (20), umfassend:
eine Brennkammerschale (57);
einen Turbinenrotor (83);
ein Schaufelpack (80) stromabwärts der Brennkammerschale (57) und stromaufwärts des Turbinenrotors (83);
eine tangentiale bordeigene Einspritzvorrichtung (64);
ein Gehäuse (71); und
eine Verbindung (62) zum Befestigen der Brennkammerschale (57), der tangentialen bordeigenen Einspritzvorrichtung (64) und des Gehäuses (71) aneinander, wobei die Verbindung (61) einen Brennkammerflansch (70), der einstückig mit der Brennkammerschale (57) ist, einen Flansch (68) der tangentialen bordeigenen Einspritzvorrichtung, der einstückig mit der tangentialen bordeigenen Einspritzvorrichtung (64) ist, und einen Gehäuseflansch (72), der einstückig mit dem Gehäuse (71) ist, aufweist, wobei der Brennkammerflansch (70), der Flansch (68) der tangentialen bordeigenen Einspritzvorrichtung und der Gehäuseflansch (72) aneinander befestigt sind, wobei der Brennkammerflansch (70) einen ersten und zweiten Satz an Löchern (75, 78) beinhaltet, die jeweils eine erste und zweite Befestigung (74, 85) aufnehmen, die sich voneinander unterscheiden, wobei die erste und zweite Befestigung (74, 85) den Brennkammerflansch (70), den Flansch (68) der tangentialen bordeigenen Einspritzvorrichtung und den Gehäuseflansch (72) aneinander befestigen, und die zweite Befestigung (85) eine Mutter und ein Bolzen ist, die sich durch den Brennkammerflansch (70), den Flansch (68) der tangentialen bordeigenen Einspritzvorrichtung und den Gehäuseflansch (72) erstreckt.

2. Brennkammeranordnung nach Anspruch 1, wobei der Brennkammerflansch (70), der Flansch (68) der tangentialen bordeigenen Einspritzvorrichtung und der Gehäuseflansch (72) ringförmige Flansche sind, die sich im Allgemeinen in einer radialen Richtung in Bezug auf eine Motorachse (A) erstrecken.

3. Brennkammeranordnung nach Anspruch 2, wobei der Flansch (68) der tangentialen bordeigenen Einspritzvorrichtung einen sich axial erstreckenden Teil (66) beinhaltet, wobei der Brennkammerflansch (70) und der Gehäuseflansch (72) radial innerhalb des sich axial erstreckenden Teils (66) aufgenommen sind.

4. Brennkammeranordnung nach Anspruch 3, wobei der Brennkammerflansch (70) axial zwischen dem Gehäuseflansch (72) und dem Flansch (68) der tangentialen bordeigenen Einspritzvorrichtung angeordnet ist.

5. Brennkammeranordnung nach Anspruch 3 oder 4, wobei:
der Brennkammerflansch (70) und der sich axial erstreckende Teil (66) in Interferenzpassbeziehung zueinander bereitgestellt sind; und/oder
der Gehäuseflansch (72) und der sich axial erstreckende Teil (66) in Interferenzpassbeziehung zueinander bereitgestellt sind.

6. Brennkammeranordnung nach einem vorhergehenden Anspruch, wobei die erste Befestigung (74) bündig mit dem Brennkammerflansch (70) und unter einer benachbarten Flanschfläche (90) angeordnet ist.

7. Brennkammeranordnung nach Anspruch 6, wobei die erste Befestigung (74) eine Flachkopfschraube ist.

8. Brennkammeranordnung nach einem der Ansprüche 1 bis 6, wobei die erste Befestigung (74) eine Niete ist.

9. Brennkammeranordnung nach einem vorhergehenden Anspruch, wobei das Schaufelpack (80) an der tangentialen bordeigenen Einspritzvorrichtung (64) und der Brennkammer (57) befestigt ist.

10. Gasturbinenmotor, umfassend die Brennkammeranordnung (56) nach Anspruch 9, einen Turbinenabschnitt (54), der den Turbinenrotor (83) beinhaltet, und einen Kernmotor, der einen Verdichterabschnitt (52) beinhaltet, wobei die Brennkammer (56) fluidisch in Kommunikation mit und zwischen dem Verdichterabschnitt (52) und dem Turbinenabschnitt (54) angeordnet ist, wobei die tangentiale bordeigene Einspritzvorrichtung eine Einspritzvorrichtung (82) beinhaltet, die Kühlfluid bereitstellt, das durch die Gehäusestruktur (71) zu dem Turbinenrotor (83) geführt wird.

11. Verfahren zur Montage einer Brennkammeranordnung (56) nach Anspruch 1, umfassend:
Anbringen des Flansches (68) der tangentialen bordeigenen Einspritzvorrichtung an dem Brennkammerflansch (70) unter Verwendung der ersten Befestigungen (74), um eine Teilanordnung zu bilden; und
Befestigen des Gehäuseflansches (72) an dem Flansch (68) der tangentialen bordeigenen Einspritzvorrichtung und dem Brennkammerflansch (70) unter Verwendung der zweiten Befestigungen (85).

12. Verfahren nach Anspruch 11, umfassend den Schritt des Befestigens der tangentialen bordeigenen Einspritzvorrichtung (64) an einem Schaufelpack (80) vor dem Anbringungsschritt.

13. Verfahren nach Anspruch 11 oder 12, wobei der Anbringungsschritt das Ziehen des Brennkammerflansches (70) und des Flansches (68) der tangentialen bordeigenen Einspritzvorrichtung zueinander in einer Interferenzpassbeziehung beinhaltet.

14. Verfahren nach Anspruch 13, wobei der Ziehschritt:
das Festziehen von Anordnungsbefestigungen und dann das Entfernen der Anordnungsbefestigungen vor dem Befestigungsschritt beinhaltet; und/oder
vor dem Anbringungsschritt durchgeführt wird, wobei der Anbringungsschritt das Einfädeln der ersten Befestigungen (74) in einen von dem Flansch (68) der tangentialen bordeigenen Einspritzvorrichtung und dem Brennkammerflansch (70) beinhaltet.

15. Verfahren nach einem der Ansprüche 11 bis 14, wobei die ersten Befestigungen (74) unter einer Fläche des Gehäuseflansches (72) angeordnet sind.

## Revendications

1. Ensemble chambre de combustion (56) pour un moteur à turbine à gaz (20), comprenant :
une coque de chambre de combustion (57) ;
un rotor de turbine (83) ;
un groupe d'aubes (80) en aval de la coque de chambre de combustion (57) et en amont du rotor de turbine (83) ;
un injecteur embarqué tangentiel (64) ;
un carter (71) ; et
une jonction (62) pour fixer ensemble la coque de la chambre de combustion (57), l'injecteur embarqué tangentiel (64) et le carter (71), la jonction (61) ayant une bride de chambre de combustion (70) intégrée à la coque de chambre de combustion (57), une bride d'injecteur embarqué tangentiel (68) intégrée à l'injecteur embarqué tangentiel (64) et une bride de carter (72) intégrée au carter (71), dans lequel la bride de chambre de combustion (70), la bride d'injecteur embarqué tangentiel (68) et la bride de carter (72) sont fixées ensemble, la bride de chambre de combustion (70) comporte des premier et second ensembles de trous (75, 78) recevant respectivement des première et seconde fixations (74, 85) qui sont différentes l'une de l'autre, les première et seconde fixations (74, 85) fixant ensemble la bride de chambre de combustion (70), la bride d'injecteur embarqué tangentiel (68) et la bride de carter (72), et la seconde fixation (85) est un écrou et un boulon qui s'étend à travers la bride de chambre de combustion (70), la bride d'injecteur embarqué tangentiel (68) et la bride de carter (72).

2. Ensemble chambre de combustion selon la revendication 1, dans lequel la bride de chambre de combustion (70), la bride d'injecteur embarqué tangentiel (68) et la bride de carter (72) sont des brides annulaires s'étendant généralement dans une direction radiale par rapport à un axe de moteur (A).

3. Ensemble chambre de combustion selon la revendication 2, dans lequel la bride d'injecteur embarqué tangentiel (68) inclut une partie s'étendant axialement (66), la bride de chambre de combustion (70) et la bride de carter (72) reçue radialement vers l'intérieur de la partie s'étendant axialement (66).

4. Ensemble chambre de combustion selon la revendication 3, dans lequel la bride de chambre de combustion (70) est agencée axialement entre la bride de carter (72) et la bride d'injecteur embarqué tangentiel (68).

5. Ensemble chambre de combustion selon la revendication 3 ou 4, dans lequel :
la bride de chambre de combustion (70) et la partie s'étendant axialement (66) sont placées en relation d'ajustement serré l'une avec l'autre ; et/ou
la bride de carter (72) et la partie s'étendant axialement (66) sont placées en relation d'ajustement serré l'une avec l'autre.

6. Ensemble chambre de combustion selon une quelconque revendication précédente, dans lequel la première fixation (74) est en affleurement avec la bride de chambre de combustion (70) et agencée sous une surface de bride adjacente (90).

7. Ensemble chambre de combustion selon la revendication 6, dans lequel la première fixation (74) est une vis à tête plate.

8. Ensemble chambre de combustion selon l'une quelconque des revendications 1 à 6, dans lequel la première fixation (74) est un rivet.

9. Ensemble chambre de combustion selon une quelconque revendication précédente, dans lequel le groupe d'aubes (80) est fixé à l'injecteur embarqué tangentiel (64) et à la chambre de combustion (57).

10. Moteur à turbine à gaz comprenant l'ensemble chambre de combustion (56) selon la revendication 9, une section de turbine (54) incluant le rotor de turbine (83), et une partie chaude du moteur incluant une section de compresseur (52), la chambre de combustion (56) agencée fluidiquement en communication avec et entre la section de compresseur (52) et la section de turbine (54), l'injecteur embarqué tangentiel comportant un injecteur (82) fournissant du fluide de refroidissement guidé par la structure de carter (71) au rotor de turbine (83).

11. Procédé de montage d'un ensemble chambre de combustion (56) selon la revendication 1, comprenant :
l'attachement de la bride d'injecteur embarqué tangentiel (68) à la bride de chambre de combustion (70) à l'aide des premières fixations (74) pour former un sous-ensemble ; et
l'assujettissement de la bride de carter (72) à la bride d'injecteur embarqué tangentiel (68) et à la bride de chambre de combustion (70) à l'aide des secondes fixations (85).

12. Procédé selon la revendication 11, comprenant l'étape d'assujettissement de l'injecteur embarqué tangentiel (64) au groupe d'aubes (80) avant l'étape d'attachement.

13. Procédé selon la revendication 11 ou 12, dans lequel l'étape d'attachement consiste à étirer la bride de chambre de combustion (70) et la bride d'injecteur embarqué tangentiel (68) l'une vers l'autre dans une relation d'ajustement serré.

14. Procédé selon la revendication 13, dans lequel l'étape d'étirement :
comporte le serrage des fixations de montage puis le retrait des attaches de montage avant l'étape de fixation ; et/ou
est réalisée avant l'étape d'attachement, l'étape d'attachement comporte le vissage des premières fixations (74) dans l'une de la bride d'injecteur embarqué tangentiel (68) et de la bride de chambre de combustion (70).

15. Procédé selon l'une quelconque des revendications 11 à 14, dans lequel les premières fixations (74) sont agencées sous une surface de la bride de carter (72).
